# EUROPÄISCHE PATENTSCHRIFT

(11) **EP 1 211 553 B1**
(45) Veröffentlichungstag und Bekanntmachung des Hinweises auf die Patenterteilung: **27.12.2006**
(21) Anmeldenummer: 01125612.0
(22) Anmeldetag: 26.10.2001
(51) Int. Cl.: G02F 1/29

(54) **Verfahren und Vorrichtung zur Modulation von unpolarisiertem Licht**
Method and apparatus for modulation of unpolarized light
Procédé et dispositif pour la modulation de lumière non polarisée

(30) Priorität: 28.11.2000 DE 10058999
(43) Veröffentlichungstag der Anmeldung: 05.06.2002
(73) Patentinhaber: Heidelberger Druckmaschinen Aktiengesellschaft, 69115 Heidelberg (DE)
(72) Erfinder: Fischer, Jörg-Achim, 24235 Laboe (DE); Gebhardt, Axel, 24248 Mönkeberg (DE); Ressel, Peter, 24232 Schönkirchen (DE)

(56) Entgegenhaltungen:
- EP-A- 0 422 956
- EP-A- 0 866 357
- US-A- 6 025 864
- PATENT ABSTRACTS OF JAPAN vol. 017, no. 428 (P-1588), 9. August 1993 (1993-08-09) & JP 05 088123 A (HIKARI KEISOKU GIJUTSU KAIHATSU KK), 9. April 1993 (1993-04-09)

## Beschreibung

Die Erfindung betrifft ein Verfahren zur Modulation, insbesondere Amplitudenmodulation, von Licht mittels wenigstens eines Bragg-Modulators auf der Basis von domäneninvertierbarem Material, insbesondere für die Aufzeichnung eines zu druckenden Produktes, vorzugsweise zur Herstellung von Druckformen.

Des weiteren betrifft die Erfindung eine Vorrichtung zur Modulation, insbesondere Amplitudenmodulation, von Licht, umfassend wenigstens einen Bragg-Modulator auf der Basis von domäneninvertierbarem Material, insbesondere für die Aufzeichnung eines zu druckenden Produktes, vorzugsweise zur Herstellung von Druckformen.

Es ist prinzipiell aus der US-A- 6 025 864 bekannt, einen auf der Basis der Domäneninversion arbeitenden Bragg-Modulator für die Aufzeichnung eines zu drukkenden Produktes zu verwenden, nämlich als Bestandteil eines Scanners.

Andererseits ist es aus der DE-A- 198 40 926 bekannt, Fiberlaser für die Druckformherstellung einzusetzen.

Fiberlaser geben aber unpolarisiertes Licht ab. Der Einsatz von Bragg-Modulatoren für das Licht aus Fiberlasern oder für anderes unpolarisiertes Licht erscheint jedoch als problematisch, weil der sich durch die Domäneninversion ändernde Brechungsindex des durch eine elektrische Spannung erzeugten Beugungsgitters nur auf eine Polarisationsrichtung bzw. nur in einer Polarisationsebene wirkt. Für unpolarisiertes Licht wird daher zu dessen Modulation üblicherweise ein akusto-optischer Modulator verwendet.

Der Erfindung liegt die Aufgabe zugrunde ein Verfahren bzw. eine Vorrichtung der eingangs genannten Gattung derart weiterzuentwickeln, daß ein Bragg-Modulator auch für die Modulation von unpolarisiertem Licht einsetzbar ist.

Diese Aufgabe wird in Verfahrenshinsicht erfindungsgemäß dadurch gelöst, daß zur Modulation von unpolarisiertem Licht ein erster Bragg-Modulator eingesetzt wird, um in einer durch seine Orientierung festgelegten Polarisationsebene einen Lichtanteil des unpolarisierten Lichtes zu modulieren, und daß dann durch einen zweiten Bragg-Modulator der Lichtanteil des unpolarisierten Lichtes moduliert wird, welcher der zur ersten Polarisationsebene orthogonalen zweiten Polarisationsebene zuzuordnen ist. Hierdurch wird letztlich das gesamte Licht, nur für seine Polarisationsebenen separat bzw. unabhängig, moduliert, so daß ein akustooptischer Modulator entbehrlich ist.

Die auf diese Weise mögliche Verwendbarkeit von Bragg-Modulatoren auch für die Modulation von unpolarisiertem Licht hat viele Vorteile. Die Modulation ist mit einem großen Wirkungsgrad in der Größenordnung von etwa 99% möglich. Dabei sind der Wirkungsgrad und die Modulationsgeschwindigkeit mit Vorteil nicht prinzipiell voneinander abhängig. Auch bei hohen Modulationsgeschwindigkeiten kann der Laserstrahl einen relativ großen Strahldurchmesser haben. Da der Strahldurchmesser groß sein kann, ergibt sich daraus, daß die Leistungsdichte im Kristall des Modulators relativ klein sein kann. Hieraus folgt wiederum, daß man mit den nur beispielhaft aufgezählten Vorteilen auch insbesondere Fiberlaser nutzen kann, und zwar insbesondere auch für die Druckformherstellung.

Eine erfindungsgemäße Vorrichtung zeichnet sich in unabhängiger Lösung der gestellten Aufgabe entsprechend durch zwei Bragg-Modulatoren für zwei mögliche, zueinander orthogonale Polarisationsebenen des unpolarisierten Lichtes aus, wobei diese beiden Bragg-Modulatoren vorzugsweise hintereinander auf dem Lichtweg angeordnet sind.

Für die Einwirkung der beiden Bragg-Modulatoren auf die beiden Polarisationsebenen des Lichtes kann das Licht zwischen den beiden Bragg-Modulatoren mittels einer λ/2- Platte um 90° gedreht werden und die Bragg-Modulatoren selbst können mit zueinander parallelen Gittern angeordnet sein, oder die Bragg-Modulatoren werden ihrerseits mit ihren Gittern um 90° um die Strahlachse des Lichtes verdreht zueinander angeordnet. Die erstgenannte Alternative der parallel angeordneten Gitter ermöglicht grundsätzlich sogar einen planaren Aufbau einer Modulatoreinheit.

Ausführungsbeispiele, aus denen sich auch weitere erfinderische Merkmale ergeben, die aber die Erfindung nicht beschränken , sind in der Zeichnung dargestellt. Es zeigen schematisch:
- Fig. 1: eine perspektivische Ansicht einer Modulatoreinrichtung in einem ersten Ausführungsbeispiel mit einer λ/2 - Platte,
- Fig. 2: eine perspektivische Ansicht eines zweiten Ausführungsbeispiels einer Modulatoreinrichtung und
- Fig. 3: eine Draufsicht auf die Modulatoreinrichtung gemäß Fig. 1.

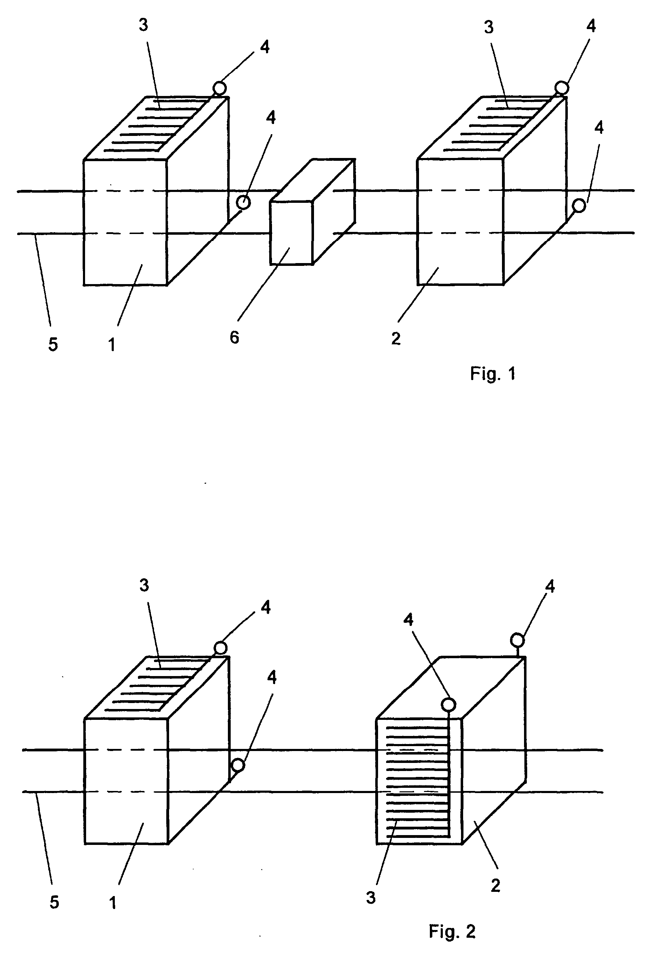

Die Fig. 1 zeigt ein erstes Ausführungsbeispiel einer Modulatoreinrichtung zur Modulation unpolarisierten Lichtes in einer perspektivischen Ansicht.

Die Modulatoreinrichtung umfaßt zwei Bragg-Modulatoren 1 und 2, die mittels eines Kristalls, z. B. aus LiNbO₃, die Erzeugung eines Beugungsgitters auf der Basis von Domäneninversion durch elektrische Ansteuerung ermöglichen. Für diese elektrische Ansteuerung sind die Bragg-Modulatoren jeweils auf zwei einander gegenüberliegenden Flächen mit kammförmigen Elektroden 3 versehen, die über Anschlüsse 4 mit einer elektrischen Spannung versorgt werden können. Dabei wird durch die Elektrodenanordnung die Gitterausbildung und -orientierung der Beugungsgitter der Bragg-Modulatoren 1,2 vorgegeben.

Wie dazu in Fig. 1 angedeutet ist, sind dort die Gitter der beiden hintereinander angeordneten Bragg-Modulatoren 1 und 2 parallel zueinander orientiert. Jeder Bragg-Modulator 1,2 wirkt aber mit seinem Gitter beugend nur in einer Polarisationsebene. Durch den ersten Bragg-Modulator 1 wird daher in dem unpolarisierten Licht eine der möglichen Polarisationsebenen ausgezeichnet und eine entsprechende Beugung bewirkt, von der nur ein dieser ausgezeichneten Polarisationsebene zugeordneter Anteil des einfallenden Lichtes 5 betroffen ist.

Zwischen dem ersten Bragg-Modulator 1 und dem zweiten Bragg-Modulator 2 ist eine λ/2 - Platte 6 angeordnet, welche das Licht 5 um seine Strahlachse im Hinblick auf seine Polarisationsebenen bzw. -richtungen um 90° dreht. Obwohl die hintereinander angeordneten Bragg-Modulatoren 1, 2 mit ihren Gittern parallel zueinander ausgerichtet sind, wirkt daher nach der Drehung des Lichtes 5 durch die λ /2 - Platte 6 der zweite Bragg-Modulator 2 in der zweiten Polarisationsebene des Lichtes 5, die zu der durch den ersten Bragg-Modulator 1 ausgezeichneten ersten Polarisationsebene des Lichtes 5 orthogonal oder um 90° verdreht ist.

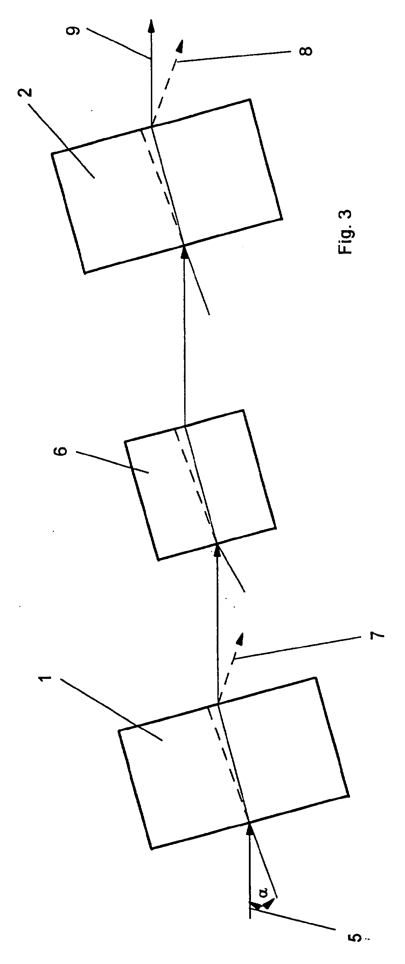

Im zweiten Ausführungsbeispiel einer Modulatoreinrichtung gemäß Fig. 2 fehlt die λ /2 - Platte 6, und statt dessen sind die beiden Bragg-Modulatoren 1, 2 mit ihren Gittern um 90° zueinander um die Strahlachse des Lichtes 5 gedreht, damit die beiden Bragg-Modulatoren 1, 2 in zwei orthogonal zueinander orientierten Polarisationsebenen des Lichtes 5 wirken.

Die Fig. 3 zeigt eine Draufsicht auf die Modulatoreinrichtung gemäß Fig. 1.

Aus dieser Darstellung ist insbesondere zu entnehmen, daß die beiden Bragg - Modulatoren 1, 2 so zueinander und insbesondere zum Licht 5 orientiert sind, daß das Licht 5 beim Eintritt in den jeweiligen Bragg-Modulator 1 bzw. 2 jeweils die sogenannte Bragg-Bedingung erfüllt, bei der die gewünschte Beugung des Lichtes erfolgt, wobei dies vom Einfallswinkel α des Lichtes 5 abhängig ist.

Die Darstellung der Fig. 3 zeigt zudem, daß durch jeden der beiden Bragg-Modulatoren 1, 2 jeweils ein Lichtanteil 7 bzw. 8 aus dem Licht 5 ausgebeugt wird, so daß der letztendlich austretende Lichtstrahl 9 entsprechend moduliert ist. Nur der Vollständigkeit halber sei erwähnt, daß bei Bedarf zusätzlich oder alternativ auch die ausgebeugten Lichtanteile 7 und/oder 8 für eine Nutzung in Frage kommen.

## Patentansprüche

1. Verfahren zur Modulation, insbesondere Amplitudenmodulation, von Licht mittels wenigstens eines Bragg-Modulators auf der Basis von domäneninvertierbarem Material, insbesondere für die Aufzeichnung eines zu druckenden Produktes, vorzugsweise zur Herstellung von Druckformen, **gekennzeichnet durch** die Modulation von unpolarisiertem Licht unter Verwendung eines ersten Bragg-Modulators zur Festlegung einer Polarisationsebene in dem unpolarisierten Licht und zur Modulation des dieser Polarisationsebene zuzuordnenden Lichtanteils und **durch** die Verwendung eines zweiten Bragg-Modulators zur Modulation des Lichtanteils des unpolarisierten Lichtes, welcher der zur Polarisationsebene des ersten Bragg-Modulators orthogonalen Polarisationsebene zuzuordnen ist.

2. Vorrichtung zur Modulation, insbesondere Amplitudenmodulation, von Licht, umfassend wenigstens einen Bragg-Modulator auf der Basis von domäneninvertierbarem Material, insbesondere für die Aufzeichnung eines zu druckenden Produktes, vorzugsweise zur Herstellung von Druckformen, **gekennzeichnet durch** einen ersten Bragg-Modulator (1) zur Festlegung einer Polarisationsebene in einem unpolarisierten Licht (5) und zur Modulation des dieser Polarisationsebene zuzuordnenden Lichtanteils und **durch** einen zweiten Bragg-Modulator (2) zur Modulation des Lichtanteils des unpolarisierten Lichtes (5), weicher der zur Polarisationsebene des ersten Bragg-Modulators (1) orthogonalen Polarisationsebene zuzuordnen ist.

3. Vorrichtung nach Anspruch 2, **dadurch gekennzeichnet, daß** der erste und der zweite Bragg-Modulator (1, 2) auf dem Lichtweg hintereinander angeordnet sind.

4. Vorrichtung nach Anspruch 3, **dadurch gekennzeichnet, daß** zwischen dem ersten und dem zweiten Bragg-Modulator (1, 2) eine λ /2 - Platte (6) angeordnet ist.

5. Vorrichtung nach Anspruch 3, **dadurch gekennzeichnet, daß** der erste und der zweite Bragg-Modulator (1, 2) mit ihren Gittern um 90° um die Strahlachse des Lichtes verdreht zueinander angeordnet sind.

## Claims

1. Method for modulating light, in particular amplitude modulation, by means of at least one Bragg modulator on the basis of domain-invertable material, in particular for recording a product to be printed, preferably for producing printing forms, **characterized by** the modulation of unpolarized light while using a first Bragg modulator for defining a polarization plane in the unpolarized light and for modulating the light portion to be assigned to this polarization plane, and by using a second Bragg modulator for modulating the light portion of the unpolarized light, which is to be assigned to the polarization plane being orthogonal to the polarization plane of the first Bragg modulator.

2. Device for modulating light, in particular amplitude modulation, comprising at least one Bragg modulator on the basis of domain-invertable material, in particular for recording a product to be printed, preferably for producing printing forms, **characterized by** a first Bragg modulator (1) for defining a polarization plane in an unpolarized light (5) and for modulating the light portion to be assigned to the latter polarization plane, and by a second Bragg modulator (2) for modulating the light portion of the unpolarized light (5), which is to be assigned to the polarization plane being orthogonal to the polarization plane of the first Bragg modulator (1).

3. The device according to claim 2, **characterized in that** the first and the second Bragg modulator (1, 2) are arranged one behind the other on the optical path.

4. The device according to claim 3, **characterized in that** a λ/2-plate (6) is arranged between the first and the second Bragg modulator (1, 2).

5. The device according to claim 3, **characterized in that** the first and the second Bragg modulator (1, 2) are arranged with respect to one another such that they are rotated with their grids by 90° degrees about the beam axis of the light.

## Revendications

1. Procédé pour la modulation, en particulier la modulation d'amplitude, de lumière au moyen d'au moins un modulateur de Bragg à base d'un matériau à domaine inversible, notamment pour l'enregistrement d'un produit à imprimer, préférentiellement pour la réalisation de plaques d'impression, **caractérisé par** la modulation de lumière non polarisée par utilisation d'un premier modulateur de Bragg pour la définition d'un plan de polarisation dans la lumière non polarisée et pour la modulation de la part de lumière à affecter à ce plan de polarisation, et par l'utilisation d'un deuxième modulateur de Bragg pour la modulation de la part de lumière non polarisée à affecter au plan de polarisation orthogonal au plan de polarisation du premier modulateur de Bragg.

2. Dispositif pour la modulation, en particulier la modulation d'amplitude, de lumière, comprenant au moins un modulateur de Bragg à base d'un matériau à domaine inversible, notamment pour l'enregistrement d'un produit à imprimer, préférentiellement pour la réalisation de plaques d'impression, **caractérisé par** un premier modulateur de Bragg (1) pour la définition d'un plan de polarisation dans une lumière non polarisée (5) et pour la modulation de la part de lumière à affecter à ce plan de polarisation, et par un deuxième modulateur de Bragg (2) pour la modulation de la part de lumière non polarisée (5) à affecter au plan de polarisation orthogonal au plan de polarisation du premier modulateur de Bragg (1).

3. Dispositif selon la revendication 2, **caractérisé en ce que** le premier et le deuxième modulateurs de Bragg (1, 2) sont disposés successivement sur la trajectoire lumineuse.

4. Dispositif selon la revendication 3, **caractérisé en ce qu'**une plaque -X/2 (6) est disposée entre le premier et le deuxième modulateurs de Bragg (1, 2) .

5. Dispositif selon la revendication 3, **caractérisé en ce que** le premier et le deuxième modulateurs de Bragg (1, 2) sont avec leurs grilles tournés l'un par rapport à l'autre, de 90° autour de l'axe de rayonnement de la lumière.
